(19) **Europäisches Patentamt European Patent Office Office européen des brevets**

(11) **EP 4 012 581 A1**

(12) **EUROPEAN PATENT APPLICATION**

published in accordance with Art. 153(4) EPC

(43) Date of publication:
**15.06.2022 Bulletin 2022/24**

(51) International Patent Classification (IPC):
***G06F 16/9535*** (2019.01)

(21) Application number: **21827170.8**

(22) Date of filing: **02.06.2021**

(86) International application number:
**PCT/CN2021/097892**

(87) International publication number:
**WO 2022/088677 (05.05.2022 Gazette 2022/18)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **26.10.2020 CN 202011155016**

(71) Applicant: **Beijing Baidu Netcom Science and Technology Co., Ltd**
**Beijing 100085 (CN)**

(72) Inventors:
 • **HUANG, Jizhou**
  **Beijing 100085 (CN)**

 • **WANG, Haifeng**
  **Beijing 100085 (CN)**
 • **FAN, Miao**
  **Beijing 100085 (CN)**
 • **SUN, Yibo**
  **Beijing 100085 (CN)**

(74) Representative: **dompatent von Kreisler Selting Werner -**
**Partnerschaft von Patent- und Rechtsanwälten mbB**
**Deichmannhaus am Dom**
**Bahnhofsvorplatz 1**
**50667 Köln (DE)**

(54) **METHOD AND APPARATUS FOR ESTABLISHING REGIONAL HEAT PREDICTION MODEL AND PREDICTING REGIONAL HEAT**

(57)    The present application discloses methods and apparatuses for regional heat prediction model establishment and regional heat prediction, and relates to the field of big data technologies. A technical solution includes: pre-training a time series prediction model using first historical regional heat data; and taking second historical regional heat data as a second support set, and further training the time series prediction model using the second support set to adjust model parameters, so as to obtain the regional heat prediction model; and the regional heat prediction model is configured to predict a second query set, and the second query set includes regional heat at a prediction time. In this way, even when the second historical regional heat data represents less distribution data, the distribution data may be effectively learned, thereby improving regional heat prediction accuracy.

Fig. 1

## Description

This application claims priority to Chinese Patent Application No. 202011155016.1, filed on October 26, 2020, entitled "Methods and Apparatuses for Regional Heat Prediction Model Establishment and Regional Heat Prediction".

## TECHNICAL FIELD

This application relates to the field of computer application technologies, particularly to the field of big data technologies, and more particularly to methods and apparatuses for regional heat prediction model establishment and regional heat prediction.

## BACKGROUND

A regional heat prediction has a great value, enables governments, institutions and individuals to more effectively optimize resource allocation and predict development trends, and even provides reference or suggestions on traffic. The regional heat prediction refers to a prediction of people flow in a region at a specified time, such as a prediction of passenger flow in a certain business district at a specified time, a prediction of passenger flow at a certain station at a specified time, etc.

The regional heat prediction is essentially a time series prediction problem, and an existing time series prediction algorithm includes feature engineering, neural network fitting, or the like. However, the existing time series prediction algorithm has high dependence on a large amount of annotation data, and may have higher prediction accuracy only after trained on data with longer stationarity series history records. However, some small probability events may affect regional heat, resulting in a drastic fluctuation of the regional heat over a period of time compared with ordinary times. However, since such a small probability event has less historical data, the data may not be effectively learned using a traditional method, resulting in poor prediction accuracy of the regional heat in the case of the small probability event.

## SUMMARY

In view of the above, the present application is intended to provide methods and apparatuses for regional heat prediction model establishment and regional heat prediction, so as to solve the above-mentioned technical problems.

In a first aspect, the present application provides a method for establishing a regional heat prediction model, including:

pre-training a time series prediction model using first historical regional heat data; and
taking second historical regional heat data as a second support set, and further training the time series prediction model using the second support set to adjust model parameters, so as to obtain the regional heat prediction model;
the regional heat prediction model being configured to predict a second query set, and the second query set including regional heat at a prediction time.

In a second aspect, the present application provides a regional heat prediction method, including:

predicting a second query set using a regional heat prediction model, the second query set including regional heat at a prediction time;
the regional heat prediction model being obtained by pre-training a time series prediction model using first historical regional heat data, then taking second historical regional heat data as a second support set, and further training the time series prediction model using the second support set.

In a third aspect, the present application provides an apparatus for establishing a regional heat prediction model, including:

a pre-training module configured to pre-train a time series prediction model using first historical regional heat data; and
a fine adjustment module configured to take second historical regional heat data as a second support set, and further train the time series prediction model using the second support set to adjust model parameters, so as to obtain the regional heat prediction model;
the regional heat prediction model being configured to predict a second query set, and the second query set including regional heat at a prediction time.

In a fourth aspect, the present application provides a regional heat prediction apparatus, including:

a predicting module configured to predict a second query set using a regional heat prediction model, the second query set including regional heat at a prediction time;
the regional heat prediction model being obtained by: pre-training a time series prediction model using first historical regional heat data, then taking second historical regional heat data as a second support set, and further training the time series prediction model using the second support set.

In a fifth aspect, the present application provides an electronic device, including:

at least one processor; and
a memory connected with the at least one processor communicatively;
where the memory stores instructions executable by the at least one processor to enable the at least one processor to perform the above-mentioned method.

In a sixth aspect, the present application provides a non-transitory computer readable storage medium storing computer instructions, which, when executed by a computer, cause the computer to perform the above-mentioned method.

From the above technical solution, in the present application, the time series prediction model pre-trained using the first historical regional heat data is finely adjusted by taking the second historical regional heat data as the support set, thereby establishing the regional heat prediction model capable of predicting the regional heat at the prediction time in the second query set. In this way, even when the second historical regional heat data represents less distribution data, the distribution data may be effectively learned, thereby improving regional heat prediction accuracy.

Other effects of the above-mentioned alternatives will be described below in conjunction with embodiments.

**BRIEF DESCRIPTION OF THE DRAWINGS**

The drawings are used for better understanding the present solution and do not constitute a limitation of the present application. In the drawings,

Fig. 1 is a flow chart of a main method according to a first embodiment of the present application;
Fig. 2 is a schematic structural diagram of a time series prediction model according to the first embodiment of the present application;
Fig. 3 is a diagram of a data instance for business district heat prediction according to the first embodiment of the present application;
Fig. 4 is a diagram of a data instance for business district heat prediction according to a second embodiment of the present application;
Fig. 5 is a structural diagram of an apparatus for establishing a regional heat prediction model according to an embodiment of the present application;
Fig. 6 is a structural diagram of a regional heat prediction apparatus according to an embodiment of the present application; and
Fig. 7 is a block diagram of an electronic device configured to implement embodiments of the present application.

**DETAILED DESCRIPTION OF EMBODIMENTS**

The following part will illustrate exemplary embodiments of the present application with reference to the drawings, including various details of the embodiments of the present application for a better understanding. The embodiments should be regarded only as exemplary ones. Therefore, those skilled in the art should appreciate that various changes or modifications can be made with respect to the embodiments described herein without departing from the scope and spirit of the present application. Similarly, for clarity and conciseness, the descriptions of the known functions and structures are omitted in the descriptions below.

In the embodiment of the present application, a few-samples-based learning technology, i.e., a few-shot learning technology is adopted, in which a large amount of regularly distributed historical data is used to train a few-shot time series prediction model, and then, by using the trained model in cooperation with a small amount of irregularly distributed historical data, satisfactory prediction accuracy may be obtained based on the small amount of irregularly distributed data, and a more ideal effect is achieved compared with a traditional supervised learning algorithm.

Few-shot learning data is composed of a support set and a query set. The support set contains instances of known categories, the query set contains more than one piece of data whose category is not labeled, and the task of the few-shot learning is predicting the category of the data in the query set.

First Embodiment

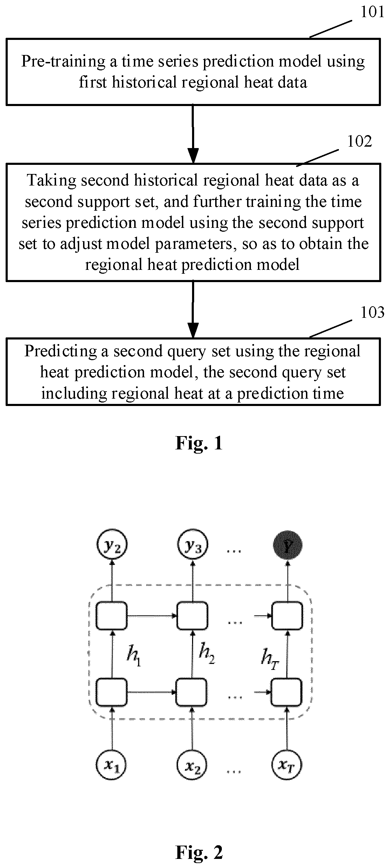

Based on the above-mentioned theory, a main method according to the first embodiment of the present application has a flow chart shown in Fig. 1, and may include the following steps:

101: pre-training a time series prediction model using first historical regional heat data.
102: taking second historical regional heat data as a second support set, and further training the time series prediction model using the second support set to adjust model parameters, so as to obtain the regional heat prediction model.

In the embodiment of the present application, the first historical regional heat data may include feature data and regional heat of a region at each time point in a first historical period. The second historical regional heat data may include feature data and regional heat of the region at each time point in a second historical period.

The region in the embodiment of the present application may be an area of interest (AOI) or a region of interest (ROI) at a geographical location, or may be a region formed by a plurality of points of interest (POIs), AOIs, ROIs, or the like. For example, the region may be a business district, a campus, a science park, or the like.

The feature data may include at least one of: a number of the POI contained in the region, data of distribution of user visiting time, data of distribution of travel modes of visiting users, or data of distribution of travel distances of the visiting users. The regional heat largely reflects a number of users visiting the region.

Further, after the regional heat prediction model is trained, step 103 may be executed using the trained regional heat prediction model; that is, a second query set is predicted using the regional heat prediction model, and the second query set includes regional heat at a prediction time.

As an example, the above-mentioned first historical regional heat data may be commonly distributed historical regional heat data. The second historical regional heat data may be uncommonly distributed historical regional heat data.

The above-mentioned method according to the present application will be described below in detail in conjunction with two embodiments with business district heat prediction as an example.

Second Embodiment

It is assumed that regional heat data of a specific business district at each time point of a historical period $T$ is known, features of the business district in the historical period $T$ may be represented by a feature sequence $X = (x_1, x_2, ... , x_T)$, and $x_t$ represents a feature vector of the business district at the time point t. Correspondingly, a passenger flow (i.e., heat) of the business district in the historical period T may be represented by $Y = (y_1, y_2, ... , y_T)$, and $y_t$ represents the heat of the business district at the time point $t$. For $X$ and $Y$ which are known, a current prediction task is to predict passenger flow $\hat{Y} = (y_{T+1}, y_{T+2}, ..., y_{T+\tau})$ at future $\tau$ time points.

$x_t$ may be obtained by feature data, such as a number of the POI contained in the business district, data of distribution of user visiting time, data of distribution of travel modes of visiting users, data of distribution of travel distances of the visiting users, or the like. Each feature is converted into a one-hot vector, and the vectors are spliced into a feature vector $x_t$ with n dimensions, n being a positive integer.

For example:
a business district is consisted of some POIs of a business place category, and then, the number of the POI contained in the business district may form a one-dimensional vector.

Distribution of visiting time of the business district may be represented by the number of visiting users in each of 24 hours of a day; that is, a 24-dimensional vector is formed.

Data of distribution of travel modes of the visiting users of the business district may be represented by a number of trips of a visiting crowd using various traffic modes, and the feature may be represented as a 4-dimensional vector on an assumption that public traffic, a bicycle, a private car and a walk serve as the traffic modes.

Data of distribution of travel distances of the visiting users of the business district may be represented by a number of different travel distances from departure places to the destination business district. If the travel distance is discretized into 10 levels (i.e.,<0.25 km, 0.25 km-0.5 km, 0.5 km-1 km, 1 km-2 km, 2 km-5 km, 5 km-6 km, 6 km-10 km, 10 km-15 km, 15 km-30 km, >30 km), the vector may be represented as a 10-dimensional vector.

Then, the vectors are spliced to obtain a 39-dimensional feature vector $x_t$. The feature vector obtained by the above-mentioned features may fully reflect the passenger flow of the business district at a specific time point, such that the subsequent prediction of the heat of the business district is more accurate.

As an example, the time series prediction model adopted in this embodiment may be based on a recurrent neural network. A structure of the model may be shown in Fig. 2.

For the prediction task, for a given input feature sequence $X = (x_1, x_2, ..., x_T)$, the feature at each time point is mapped into a m -dimensional hidden-layer state vector $h_t$ using the recurrent neural network, which may be represented as:

$$h_t = F(x_t, h_{t-1}) \qquad (1)$$

where $F$ is a nonlinear function, and may be a recurrent neural network with a sequence modeling capability, such as a long short-term memory (LSTM), a gated recurrent unit (GRU), or the like.

The hidden-layer state vector $h_T$ at the last moment in the historical period T is sent into a feedforward neural network to obtain prediction output $\hat{Y}$ which is represented as:

$$\hat{Y} = Wh_T + b \qquad (2)$$

where W and $b$ are model parameters, $W$ is a $m \times \tau$ -dimensional vector, and $b$ is a $\tau$ -dimensional vector.

In the training process, the above-mentioned time series prediction model is firstly pre-trained using the feature data and the heat of the business district at each time point in the first historical period T1. Then, the pre-trained time series prediction model is further trained using the feature data and the heat of the business district at each time point in the second historical period T2, so as to adjust the model parameters.

In the pre-training process using the feature data and the heat of the business district at each time point in the first historical period $T$1, a training set may be constructed using the feature data and the business district heat at each time point in the first historical period T1. A time window $T_w$ may be adopted, $T_w$ has a length less than duration of T1 and duration of $T2$, and the length of the time window $T_w$ is the same as duration of the historical period $T$ in the above-mentioned prediction task. Usually, the time window is much less than the duration of *T*1 and the duration of *T*2; for example, duration of 5 time points is selected as the time window $T_w$. During construction of the training set, one training set is constructed by the feature data and the business district heat at each time point in the time window $T_w$ and the business district heat of $\tau$ time points after the time window $T_w$. N training sets may be generated by sliding the time window $T_w$ in the first historical period *T1, N* being a positive integer.

In the training process, the time series prediction model predicts the business district heat of the $\tau$ time points after the time window $T_w$ using the feature data and the business district heat at each time point in the time window $T_w$, with a training target of minimizing a difference value between a prediction result and the business district heat of the $\tau$ time points after the time window $T_w$ in the training set. A loss function may be constructed using the above-mentioned training target (i.e., the difference value between the prediction result and the business district heat of the $\tau$ time points after the time window $T_w$ in the training set). For example, a mean square error loss function may be constructed using the prediction result and the business district heat of the $\tau$ time points after the time window $T_w$ in the training set, and a value of the loss function may be used to perform back propagation to optimize the parameters of the time series prediction model until a training ending condition is met. For example, the value of the loss function is less than or equal to a preset loss function threshold, or a number of iterations reaches a preset number threshold.

For example, the loss function L may adopt the following formula:

$$ L = \frac{1}{N} \sum_{i=1}^{N} (\widehat{Y}^i - Y^i)^2 \qquad (3) $$

where *N* is a number of the training set, $\widehat{Y}^i$ is a prediction value, by the time series prediction model, of the business district heat of the $\tau$ time points after the time window $T_w$ in the i th training set, and Y' is a value of the business district heat of the $\tau$ time points after the time window $T_w$ in the i th training set.

After the time series prediction model is pre-trained, when the pre-trained time series prediction model is further trained using the feature data and the business district heat (i.e., the second support set) at each time point in the second historical period T2, a training set is also constructed by means of the above-mentioned time window, with a difference of further optimization and adjustment of the model parameters of the pre-trained time series prediction model.

The pre-trained and adjusted time series prediction model may be configured to predict the business district heat of part of time points in the second query set. The part of time points refer to the prediction time, and the prediction time has duration less than or equal to the

above-mentioned $\tau$. During the prediction, the feature data and the business district heat at each time point in the time period T before the prediction time are input into the time series prediction model to obtain the regional heat at the prediction time output by the time series prediction model. The above-mentioned formulas (1) and (2) are adopted in the prediction method.

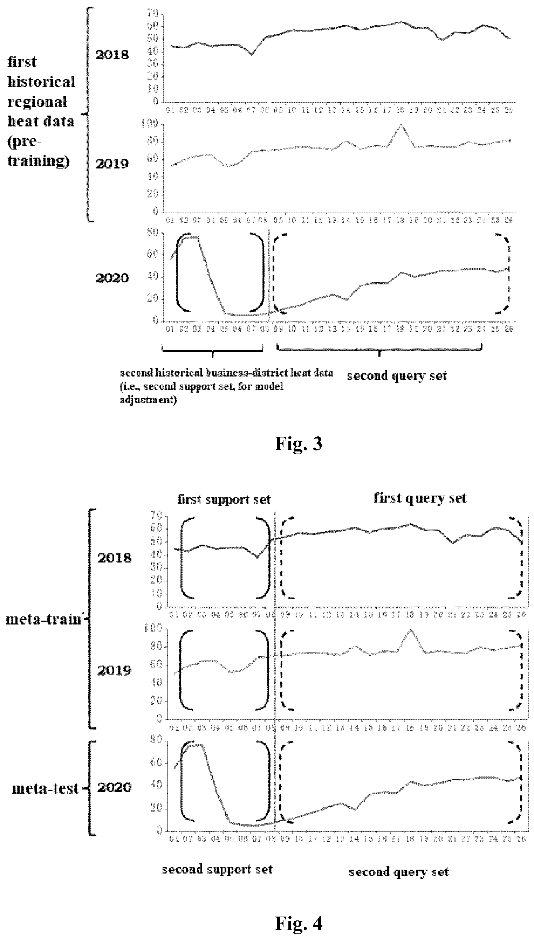

For example, as shown in Fig. 3, heat data of a business district in each week of 2018 and 2019 may be used as first historical business-district heat data; that is, the heat data of the business district in each week of 2018 and 2019 may be used as a training task to construct a training set, so as to pre-train the time series prediction model. Since a well-known small probability event occurs in 2020, heat data of 1st to 8th weeks in 2020 may be used as second historical business-district heat data to further train the time series prediction model, so as to adjust the model parameters. The regional heat prediction model is obtained after the adjustment to predict regional heat at a prediction time in 9th to 26th weeks (i.e., the second query set) in 2020.

Third Embodiment

In this embodiment, a further improvement is performed on the basis of the second embodiment, and the time series prediction model is pre-trained using a meta-learning method, thereby obtaining model parameters which may be quickly fitted on the second support set.

In this embodiment, at least one meta-training task is constructed using the first historical regional heat data before the pre-training process. Each meta-training task includes a first support set and a first query set, and the time series prediction model is trained using a meta-learning mechanism.

For example, as shown in Fig. 4, a meta-training task is constructed using heat data of a business district in 2018, and another meta-training task is constructed using heat data of the business district in 2019. Division of a support set and a query set is performed in each training task. In order to distinguish the support sets and the query sets between the fine adjustment task and the prediction task, in the embodiment of the present application, the support set and the query set in the pre-training task are referred to as "first support set" and "first query set", the support set in the subsequent fine adjustment task is referred to as "second support set", and the query set in the prediction task is referred to as "second query set". The terms "first" and "second" do not have a quantitative or sequential meaning, but merely serve to distinguish between names. In addition, in this embodiment, the training task actually corresponds to a meta-training process in the meta-learning mechanism, and the fine adjustment task and the prediction task actually correspond to a meta-testing process in the meta-learning mechanism.

The first support set and the first query set have consistent duration with the second support set and the second query set respectively. As shown in Fig. 4, the heat data of the business district in 1st to 8th weeks in 2018 is used as the first support set in a first meta-training task, and the heat data of the business district in 9th to 26th weeks is used as the first query set. The heat data of the business district in 1st to 8th weeks in 2019 is used as the first support set in a second meta-training task, and the heat data of the business district in 9th to 26th weeks is used as the first query set.

Unlike the second embodiment, in the meta-training process, for each meta-learning task, a gradient is calculated on the first support set, meta parameters are updated, and a gradient of the loss function of all the meta-learning tasks on the first query set is calculated and used to update the model parameters until the training ending condition is met. For example, the value of the loss function is less than or equal to a preset loss function threshold, or a number of iterations reaches a preset number threshold. So far, the pre-training process is completed to obtain the pre-trained time series prediction model.

Then, the pre-trained time series prediction model is further trained using the second support set (for example, the heat data of the business district in 1st to 8th weeks of 2020 in Fig. 4) to adjust the model parameters. In this process, a gradient of the loss function on the second support set is calculated and used to update the model parameters. The adjusting process and the subsequent prediction process of the regional heat at the prediction time in the second query set are similar to those in the second embodiment, and are not repeated herein.

In the above-mentioned training process, a training set is constructed in a similar manner as in the second embodiment; that is, one training set is constructed by the feature data and the business district heat at each time point in the time window $T_w$ and the business district heat of $\tau$ time points after the time window $T_w$. A plurality of corresponding training sets may be generated by sliding the time window $T_w$ in the corresponding first support set, first query set and second support set. In this embodiment, the time window $T_w$ has a length less than duration of the first support set and duration of the first query set. For the training target and the constructed loss function, reference is made to the related description in the second embodiment, which are not repeated herein.

Using the technical solution in the above-mentioned embodiment, when a small probability event occurs, the model may be enabled in well understanding a continuous influence of the small probability event on the region, and the regional heat may be more accurately predicted, thereby assisting a user in more pertinently optimizing a resource allocation and predicting a development trend.

After the above-mentioned prediction of the regional heat at the prediction time, the prediction result may be displayed, stored in a specific format, or further analyzed. The prediction result may also be sent to a user terminal, either actively or in response to a request from the user terminal.

The method according to the present application is described above in detail, and an apparatus according to the present application will be described below in detail in conjunction with an embodiment.

Fourth Embodiment

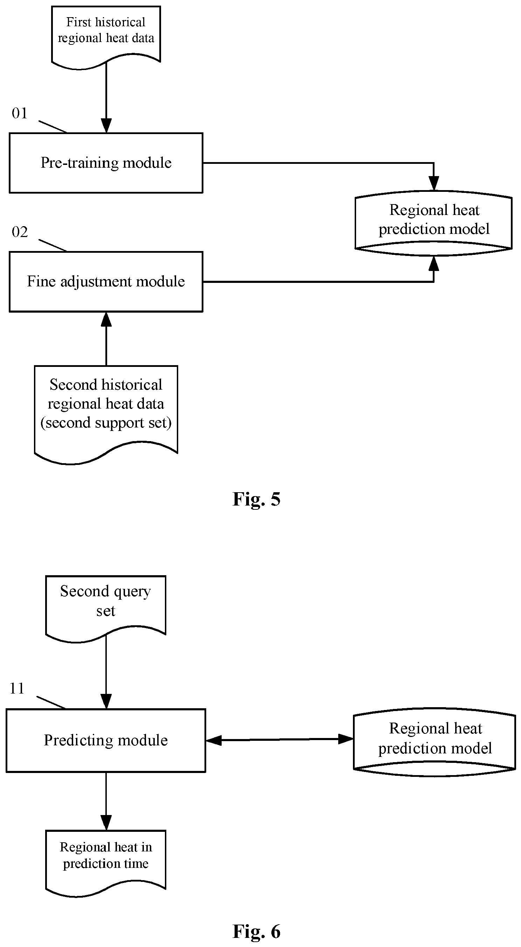

Fig. 5 is a structural diagram of an apparatus for establishing a regional heat prediction model according to the embodiment of the present application; the apparatus may be configured as an application located at a server, or a functional unit, such as a plug-in or software development kit (SDK) located in the application of the server, or the like, or be located at a computer terminal, which is not particularly limited in the embodiment of the present disclosure. As shown in Fig. 5, the apparatus may include a pre-training module 01 and a fine adjustment module 02. The main functions of each constitutional unit are as follows.

The pre-training module 01 is configured to pre-train a time series prediction model using first historical regional heat data.

The fine adjustment module 02 is configured to take second historical regional heat data as a second support set, and further train the time series prediction model using the second support set to adjust model parameters, so as to obtain the regional heat prediction model.

The regional heat prediction model is configured to predict a second query set, and the second query set includes regional heat at a prediction time.

As a preferred embodiment, the first historical regional heat data includes feature data and regional heat of a region at each time point in a first historical period; and

the second historical regional heat data includes feature data and regional heat of the region at each time point in a second historical period.

The feature data includes at least one of: a number of POIs contained in the region, data of distribution of user visiting time, data of distribution of travel modes of visiting users, or data of distribution of travel distances of the visiting users.

The time series prediction model has a training target of minimizing a difference value between a prediction result and an expected value, the prediction result is is a result of the time series model predicting the regional heat of $\tau$ time points after a time window $T_w$ using the feature data and the regional heat at each time point in the time window $T_w$, and the expected value is the regional heat of the $\tau$ time points after the time window $T_w$ in a corresponding set; the time window $T_w$ is less than a length of the first historical period and a length of the second historical period, and $\tau$ is a positive integer.

As a preferred embodiment, the pre-training module 01 may construct at least one meta-training task using the first historical regional heat data; and train the time series prediction model using a meta-learning mechanism based on a first support set and a first query set in the meta-training task; the first support set and the first query set have consistent duration with the second support set and the second query set respectively.

When training the time series prediction model using the meta-learning mechanism, the pre-training module 01 may, for each meta-learning task, calculate a gradient of a loss function on the first support set, and update meta parameters; and determine a gradient of the loss function of all the meta-learning tasks on the first query set and use the gradient of the loss function of all the meta-learning tasks on the first query set to update model parameters.

The fine adjustment module 02 is specifically configured to calculate a gradient of the loss function on the second support set and use the gradient of the loss function on the second support set to update the model parameters.

The loss function may be constructed, after the time series model predicts the regional heat of the $\tau$ time points after the time window $T_w$ using the feature data and the regional heat at each time point in the time window $T_w$, using the difference value between the prediction result and the regional heat of the $\tau$ time points after the time window $T_w$ in a corresponding set.

The time window $T_w$ has a length less than duration of the first support set and duration of the first query set, and $\tau$ is a positive integer.

Fifth Embodiment

Fig. 6 is a structural diagram of a regional heat prediction apparatus according to an embodiment of the present application; the apparatus may be configured as an application located at a server, or a functional unit, such as a plug-in or software development kit (SDK) located in the application of the server, or the like, or be located at a computer terminal, which is not particularly limited in the embodiment of the present disclosure. As shown in Fig. 6, the apparatus may include:

a predicting module 11 configured to predict a second query set using a regional heat prediction model, the second query set including regional heat at a prediction time.

The regional heat prediction model is obtained by: pre-training a time series prediction model using first historical regional heat data, then taking second historical regional heat data as a second support set, and further training the time series prediction model using the second support set. That is, the regional heat prediction model is pre-trained using the apparatus shown in Fig. 5.

The first historical regional heat data includes feature data and regional heat of a region at each time point in a first historical period; and
the second historical regional heat data includes feature data and regional heat of the region at each time point in a second historical period.

As a preferred embodiment, the predicting module 11 may predict the regional heat at the prediction time using the feature data and the regional heat at each time point in a time window $T$ before the prediction time; the time window $T$ is less than a length of the first historical period and a length of the second historical period.

The above-mentioned time window T actually has a consistent length with the time window $T_w$ used in the process of training the time series prediction model in the fourth embodiment, and total duration of the prediction time is required to be less than or equal to the duration of $\tau$ used in the process of training the time series prediction model.

According to an embodiment of the present application, there are also provided an electronic device and a readable storage medium.

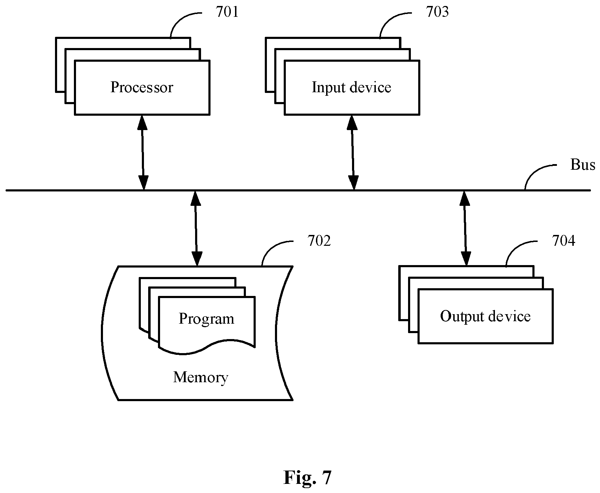

Fig. 7 is a block diagram of an electronic device for the method for establishing a regional heat prediction model or the regional heat prediction method according to the embodiments of the present application. The electronic device is intended to represent various forms of digital computers, such as laptop computers, desktop computers, workstations, personal digital assistants, servers, blade servers, mainframe computers, and other appropriate computers. The electronic device may also represent various forms of mobile devices, such as personal digital processors, cellular telephones, smart phones, wearable devices, and other similar computing devices. The components shown herein, their connections and relationships, and their functions, are meant to be exemplary only, and are not meant to limit implementation of the present application described and/or claimed herein.

As shown in Fig. 7, the electronic device includes one or more processors 701, a memory 702, and interfaces configured to connect the components, including high-speed interfaces and low-speed interfaces. The components are interconnected using different buses and may be mounted at a common motherboard or in other manners as desired. The processor may process instructions for execution within the electronic device, including instructions stored in or at the memory to display graphical information for a GUI at an external input/output device, such as a display device coupled to the interface. In other implementations, plural processors and/or plural buses may be used with plural memories, if desired. Also, plural electronic devices may be connected, with each device providing some of necessary operations (for example, as a server array, a group of blade servers, or a multi-processor system). In Fig. 7, one processor 701 is taken as an example.

The memory 702 is configured as the non-transitory computer readable storage medium according to the present application. The memory stores instructions executable by the at least one processor to cause the at least one processor to perform the method for establishing a regional heat prediction model or the regional heat prediction method according to the present application. The non-transitory computer readable storage medium according to the present application stores computer instructions for causing a computer to perform the method for establishing a regional heat prediction model or the regional heat prediction method according to the present application.

The memory 702 which is a non-transitory computer readable storage medium may be configured to store non-transitory software programs, non-transitory computer executable programs and modules, such as program instructions/modules corresponding to the method for establishing a regional heat prediction model or the regional heat prediction method according to the embodiments of the present application. The processor 701 executes various functional applications and data processing of a server, that is, implements the method for establishing a regional heat prediction model or the regional heat prediction method according to the above-mentioned embodiments, by running the non-transitory software programs, instructions, and modules stored in the memory 702.

The memory 702 may include a program storage area and a data storage area, and the program storage area may store an operating system and an application program required for at least one function; the data storage area may store data created according to use of the electronic device, or the like. Furthermore, the memory 702 may include a high-speed random access memory, or a non-transitory memory, such as at least one magnetic disk storage device, a flash memory device, or other non-transitory solid state storage devices. In some embodiments, optionally, the memory 702 may include memories remote from the processor 701, and such remote memories may be connected to the electronic device via a network. Examples of such a network include, but are not limited to, the Internet, intranets, local area networks, mobile communication networks, and combinations thereof.

The electronic device may further include an input device 703 and an output device 704. The processor 701, the memory 702, the input device 703 and the output device 704 may be connected by a bus or other means, and Fig. 7 takes the connection by a bus as an example.

The input device 703 may receive input numeric or character information and generate key signal input related to user settings and function control of the electronic device, such as a touch screen, a keypad, a mouse, a track pad, a touch pad, a pointing stick, one or more mouse buttons, a trackball, a joystick, or the like. The output device 704 may include a display device, an auxiliary lighting device (for example, an LED) and a tactile feedback device (for example, a vibrating motor), or the like. The display device may include, but is not limited to, a liquid crystal display (LCD), a light emitting diode (LED) display, and a plasma display. In some implementations, the display device may be a touch screen.

Various implementations of the systems and technologies described here may be implemented in digital electronic circuitry, integrated circuitry, application specific integrated circuits (ASIC), computer hardware, firmware, software, and/or combinations thereof. The systems and technologies may be implemented in one or more computer programs which are executable and/or interpretable on a programmable system including at least one programmable processor, and the programmable processor may be special or general, and may receive data and instructions from, and transmit data and instructions to, a storage system, at least one input device, and at least one output device.

These computer programs (also known as programs, software, software applications, or codes) include machine instructions for a programmable processor, and may be implemented using high-level procedural and/or object-oriented programming languages, and/or assembly/machine languages. As used herein, the terms "machine readable medium" and "computer readable medium" refer to any computer program product, device and/or apparatus (for example, magnetic discs, optical disks, memories, programmable logic devices (PLD)) for providing machine instructions and/or data for a programmable processor, including a machine readable medium which receives machine instructions as a machine readable signal. The term "machine readable signal" refers to any signal for providing machine instructions and/or data for a programmable processor.

To provide interaction with a user, the systems and technologies described here may be implemented on a computer having: a display device (for example, a cathode ray tube (CRT) or liquid crystal display (LCD) monitor) for displaying information to a user; and a keyboard and a pointing device (for example, a mouse or a trackball) by which a user may provide input for the computer. Other kinds of devices may also be used to provide interaction with a user; for example, feedback provided for a user may be any form of sensory feedback (for example, visual feedback, auditory feedback, or tactile feedback); and input from a user may be received in any form (including acoustic, speech or tactile input).

The systems and technologies described here may be implemented in a computing system (for example, as a data server) which includes a back-end component, or a computing system (for example, an application server) which includes a middleware component, or a computing system (for example, a user computer having a graphical user interface or a web browser through which a user may interact with an implementation of the systems and technologies described here) which includes a front-end component, or a computing system which includes any combination of such back-end, middleware, or front-end components. The components of the system may be interconnected through any form or medium of digital data communication (for example, a communication network). Examples of the communication network include: a local area network (LAN), a wide area network (WAN) and the Internet.

A computer system may include a client and a server. Generally, the client and the server are remote from each other and interact through the communication network. The relationship between the client and the server is generated by virtue of computer programs which run on respective computers and have a client-server relationship to each other.

It should be understood that various forms of the flows shown above may be used and reordered, and steps may be added or deleted. For example, the steps described in the present application may be executed in parallel, sequentially, or in different orders, which is not limited herein as long as the desired results of the technical solution disclosed in the present application may be achieved.

The above-mentioned implementations are not intended to limit the scope of the present application. It should be understood by those skilled in the art that various modifications, combinations, sub-combinations and substitutions may be made, depending on design requirements and other factors. Any modification, equivalent substitution and improvement made within the spirit and principle of the present application all should be included in the extent of protection of the present application.

**Claims**

1. A method for establishing a regional heat prediction model, comprising:

   pre-training a time series prediction model using first historical regional heat data; and
   taking second historical regional heat data as a second support set, and further training the time series prediction model using the second support set to adjust model parameters, so as to obtain the regional heat prediction model;
   wherein the regional heat prediction model is configured to predict a second query set, and the second query set comprises regional heat at a prediction time.

2. The method according to claim 1, wherein the first historical regional heat data comprises feature data and regional heat of a region at each time point in a first historical period; and
   wherein the second historical regional heat data comprises feature data and regional heat of the region at each time point in a second historical period.

3. The method according to claim 2, wherein the feature data comprises at least one of:
   a number of POIs contained in the region, data of distribution of user visiting time, data of distribution of travel modes of visiting users, or data of distribution of travel distances of the visiting users.

4. The method according to claim 2, wherein the time series prediction model has a training target of minimizing a difference value between a prediction result and an expected value, wherein the prediction result is a result of the time series model predicting the regional heat of $\tau$ time points after a time window $T_w$ using the feature data and the regional heat at each time point in the time window $T_w$, and the expected value is the regional heat of the $\tau$ time points after the time window $T_w$ in a corresponding set; and wherein the time window $T_w$ is less than a length of the first historical period and a length of the second historical period, and $\tau$ is a positive integer.

5. The method according to claim 1, wherein pre-training the time series prediction model using the first historical regional heat data comprises:

   constructing at least one meta-training task using the first historical regional heat data; and
   training the time series prediction model using a meta-learning mechanism based on a first support set and a first query set in the meta-training task;
   wherein the first support set and the first query set have consistent duration with the second support set and the second query set respectively.

6. The method according to claim 5, wherein training the time series prediction model using the meta-learning mechanism comprises: for each meta-learning task, calculating a gradient of a loss function on the first support set, and updating meta parameters; and determining a gradient of the loss function of all the meta-learning tasks on the first query set and using the gradient of the loss function of all the meta-learning tasks on the first query set to update model parameters; and
   wherein the further training the time series prediction model using the second support set to adjust model parameters comprises: calculating a gradient of the loss function on the second support set and using the gradient of the loss function on the second support set to update the model parameters.

7. The method according to claim 6, wherein the loss function is constructed, after the time series model predicting the regional heat of the $\tau$ time points after the time window $T_w$ using the feature data and the regional heat at each time point in the time window $T_w$, using the difference value between the prediction result and the regional heat of the $\tau$ time points after the time window $T_w$ in a corresponding set;
   wherein the time window $T_w$ has a length less than duration of the first support set and duration of the first query set, and $\tau$ is a positive integer.

8. A regional heat prediction method, comprising:

   predicting a second query set using a regional heat prediction model, the second query set comprising regional heat at a prediction time; wherein the regional heat prediction model being obtained by: pre-training a time series prediction model using first historical regional heat data, then taking second historical regional heat data as a second support set, and further training the time series prediction model using the second support set.

9. The method according to claim 8, wherein the first historical regional heat data comprises feature data and regional heat of a region at each time point in a first historical period; and
   wherein the second historical regional heat data comprises feature data and regional heat of the region at each time point in a second historical period.

10. The method according to claim 9, wherein the predicting the second query set using a regional heat prediction model comprises:

    predicting the regional heat at the prediction time using the feature data and the regional heat at each time point in a time window T before the prediction time;
    wherein the time window T is less than a length of the first historical period and a length of the second historical period.

11. An apparatus for establishing a regional heat prediction model, comprising:

    a pre-training module configured to pre-train a time series prediction model using first historical regional heat data; and
    a fine adjustment module configured to take second historical regional heat data as a second support set, and further train the time series prediction model using the second support set to adjust model parameters, so as to obtain the regional heat prediction model;
    wherein the regional heat prediction model is configured to predict a second query set, and the second query set comprising regional heat at a prediction time.

12. The apparatus according to claim 11, wherein the first historical regional heat data comprises feature data and regional heat of a region at each time point in a first historical period; and
    wherein the second historical regional heat data comprises feature data and regional heat of the region at each time point in a second historical period.

13. The apparatus according to claim 12, wherein the feature data comprises at least one of:
    a number of POIs contained in the region, data of distribution of user visiting time, data of distribution of travel modes of visiting users, or data of distribution of travel distances of the visiting users.

14. The apparatus according to claim 12, wherein the time series prediction model has a training target of minimizing a difference value between a prediction result and an expected value, wherein the prediction result is a result of the time series model predicting the regional heat of $\tau$ time points after a time window $T_w$ using the feature data and the regional heat at each time point in the time window $T_w$, and the expected value is the regional heat of the $\tau$ time points after the time window $T_w$ in a corresponding set; and
    wherein the time window $T_w$ is less than a length of the first historical period and a length of the second historical period, and $\tau$ is a positive integer.

15. The apparatus according to claim 11, wherein the pre-training module is specifically configured to:

    construct at least one meta-training task using the first historical regional heat data; and
    train the time series prediction model using a meta-learning mechanism based on a first support set and a first query set in the meta-training task;
    wherein the first support set and the first query set have consistent duration with the second support set and the second query set respectively.

16. The apparatus according to claim 15, wherein when training the time series prediction model using the meta-learning mechanism, the pre-training module is specifically configured to:

    for each meta-learning task, calculate a gradient of a loss function on the first support set, and update meta parameters; and determine a gradient of the loss function of all the meta-learning tasks on the first query set and use the gradient of the loss function of all the meta-learning tasks on the first query set to update model parameters; and
    wherein the fine adjustment module is specifically configured to calculate a gradient of the loss function on the second support set and use the gradient of the loss function on the second support set to update the model parameters.

17. The apparatus according to claim 16, wherein the loss function is constructed, after the time series model predicting the regional heat of the $\tau$ time points after the time window $T_w$ using the feature data and the regional heat at each time point in the time window $T_w$, using the difference value between the prediction result and the regional heat of the $\tau$ time points after the time window $T_w$ in a corresponding set; wherein the time window $T_w$ has a length less than duration of the first support set and duration of the first query set, and $\tau$ is a positive integer.

18. A regional heat prediction apparatus, comprising:

a predicting module configured to predict a second query set using a regional heat prediction model, the second query set comprising regional heat at a prediction time; wherein the regional heat prediction model being obtained by: pre-training a time series prediction model using first historical regional heat data, then taking second historical regional heat data as a second support set, and further training the time series prediction model using the second support set.

19. The apparatus according to claim 18, wherein the first historical regional heat data comprises feature data and regional heat of a region at each time point in a first historical period; and wherein the second historical regional heat data comprises feature data and regional heat of the region at each time point in a second historical period.

20. The apparatus according to claim 19, wherein the predicting module is specifically configured to predict the regional heat at the prediction time using the feature data and the regional heat at each time point in a time window T before the prediction time; wherein the time window T is less than a length of the first historical period and a length of the second historical period.

21. An electronic device, comprising:

at least one processor; and a memory connected with the at least one processor communicatively; wherein the memory stores instructions executable by the at least one processor to enable the at least one processor to perform the method according to any one of claims 1 to 10.

22. A non-transitory computer readable storage medium storing computer instructions, which, when executed by a computer, cause the computer to perform the method according to any one of claims 1 to 10.

101

Pre-training a time series prediction model using first historical regional heat data

102

Taking second historical regional heat data as a second support set, and further training the time series prediction model using the second support set to adjust model parameters, so as to obtain the regional heat prediction model

103

Predicting a second query set using the regional heat prediction model, the second query set including regional heat at a prediction time

**Fig. 1**

**Fig. 2**

**Fig. 3**

**Fig. 4**

First historical
regional heat data

01

Pre-training module

Regional heat
prediction model

02

Fine adjustment module

Second historical
regional heat data
(second support set)

**Fig. 5**

Second query
set

11

Predicting module

Regional heat
prediction model

Regional heat in
prediction time

**Fig. 6**

**Fig. 7**

## INTERNATIONAL SEARCH REPORT

| International application No. |
| --- |
| **PCT/CN2021/097892** |

**A. CLASSIFICATION OF SUBJECT MATTER**

G06F 16/9535(2019.01)i

According to International Patent Classification (IPC) or to both national classification and IPC

**B. FIELDS SEARCHED**

Minimum documentation searched (classification system followed by classification symbols)

G06F; G06N; G06Q; G06K

Documentation searched other than minimum documentation to the extent that such documents are included in the fields searched

Electronic data base consulted during the international search (name of data base and, where practicable, search terms used)

USTXT; DWPI; SIPOABS; CNABS; CNTXT: 区域, 地区, 热度, 人流, 客流, 流量, 历史, 过去, 预测, 推测, 模型, 网络, LSTM, RNN, GRU, 门控循环, 门循环, 循环神经网络, 长短期记忆网络, 训练, 时序, 序列, 元学习, 小, 少, 样本, 支持样本, 支持集, 支撑集, 训练集, 数据集, area, region+, human, people, passenger?, flow, traffic, predict+, forecast+, history, network, model, train+, sequence?, series, time, meta learning, meta-learning, few shot, few-shot, support set, sample

**C. DOCUMENTS CONSIDERED TO BE RELEVANT**

| Category* | Citation of document, with indication, where appropriate, of the relevant passages | Relevant to claim No. |
| --- | --- | --- |
| PX | CN 112269930 A (BEIJING BAIDU NETCOM SCIENCE AND TECHNOLOGY CO., LTD.) 26 January 2021 (2021-01-26) claims 1-22 | 1-22 |
| Y | CN 108345857 A (BEIJING TIANYUAN INNOVATION TECHNOLOGY CO., LTD.) 31 July 2018 (2018-07-31) description paragraphs 26-115 | 1-22 |
| Y | CN 110852447 A (TENCENT CLOUD COMPUTING (BEIJING) CO., LTD.) 28 February 2020 (2020-02-28) description, paragraphs 4-94 | 1-22 |
| A | CN 110826695 A (JD DIGITAL CITY (CHENGDU) TECHNOLOGY CO., LTD.) 21 February 2020 (2020-02-21) entire document | 1-22 |
| A | CN 111144648 A (CHINA UNITED NETWORK COMMUNICATIONS CORPORATION LIMITED et al.) 12 May 2020 (2020-05-12) entire document | 1-22 |

| ☑ Further documents are listed in the continuation of Box C. | ☑ See patent family annex. |
| --- | --- |

| * Special categories of cited documents: | |
| --- | --- |
| "A" document defining the general state of the art which is not considered to be of particular relevance | "T" later document published after the international filing date or priority date and not in conflict with the application but cited to understand the principle or theory underlying the invention |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| **01 September 2021** | **08 September 2021** |

| Name and mailing address of the ISA/CN | Authorized officer |
| --- | --- |
| **China National Intellectual Property Administration (ISA/ CN)** **No. 6, Xitucheng Road, Jimenqiao, Haidian District, Beijing 100088** **China** | |
| Facsimile No. **(86-10)62019451** | Telephone No. |

Form PCT/ISA/210 (second sheet) (January 2015)

**INTERNATIONAL SEARCH REPORT**

| International application No. |
| --- |
| **PCT/CN2021/097892** |

| C. | DOCUMENTS CONSIDERED TO BE RELEVANT | | |
| --- | --- | --- | --- |
| Category* | Citation of document, with indication, where appropriate, of the relevant passages | | Relevant to claim No. |
| A | JP 2019040475 A (NIPPON TELEGRAPH & TELEPHONE CORPORATION) 14 March 2019 (2019-03-14)<br>entire document | | 1-22 |

## INTERNATIONAL SEARCH REPORT
### Information on patent family members

International application No.

**PCT/CN2021/097892**

| Patent document cited in search report | | | Publication date (day/month/year) | Patent family member(s) | | | Publication date (day/month/year) |
|---|---|---|---|---|---|---|---|
| CN | 112269930 | A | 26 January 2021 | None | | | |
| CN | 108345857 | A | 31 July 2018 | None | | | |
| CN | 110852447 | A | 28 February 2020 | None | | | |
| CN | 110826695 | A | 21 February 2020 | None | | | |
| CN | 111144648 | A | 12 May 2020 | None | | | |
| JP | 2019040475 | A | 14 March 2019 | JP | 6761789 | B2 | 30 September 2020 |

Form PCT/ISA/210 (patent family annex) (January 2015)

**REFERENCES CITED IN THE DESCRIPTION**

**Patent documents cited in the description**

- CN 202011155016